# EUROPÄISCHE PATENTSCHRIFT

(11) **EP 2 569 787 B1**
(45) Veröffentlichungstag und Bekanntmachung des Hinweises auf die Patenterteilung: **07.05.2014**
(21) Anmeldenummer: 11706754.6
(22) Anmeldetag: 23.02.2011
(51) Int. Cl.: H01H 9/00, H01F 29/02

(54) **SCHALTANORDNUNG**
SWITCHING ARRANGEMENT
DISPOSITIF DE COMMUTATION

(30) Priorität: 11.05.2010 DE 102010020137
(43) Veröffentlichungstag der Anmeldung: 20.03.2013
(73) Patentinhaber: Maschinenfabrik Reinhausen GmbH, 93059 Regensburg (DE)
(72) Erfinder: RAITH, Andreas, 94259 Kirchberg (DE)
(86) Internationale Anmeldenummer: PCT/EP2011/000857
(87) Internationale Veröffentlichungsnummer: WO 2011/141080

(56) Entgegenhaltungen:
- US-A- 4 496 805
- US-A- 4 527 022

## Beschreibung

Die Erfindung bezieht sich auf eine Schaltanordnung für einen Umsteller gemäß dem Oberbegriff des Patentanspruchs 1.

Gattungsgemäße Schaltanordnungen sind aus dem Stand der Technik hinreichend bekannt, wie z.B. aus dem US 4 496 805 A. Sie finden in Umstellern von Transformatoren, insbesondere von Stufentransformatoren Anwendung und dienen dem leistungslosen, d.h. spannungs- bzw. stromlosen Umschalten zwischen verschiedenen Wicklungsanzapfungen des am Umsteller angeschlossenen Transformators. Eine derartige Schaltanordnung besteht im Wesentlichen aus mehreren kreisförmig um eine zentrale Mittellängsachse angeordneten Kontaktstäben und einer zentralen Schaltwelle, an der eine Kontaktanordnung befestigt ist. Die Kontaktanordnung dient der elektrischen Kontaktierung von zwei zueinander benachbarten Kontaktstäben, um dadurch ein definiertes Transformationsverhältnis des mit der Schaltanordnung verbundenen Transformators zu bewirken.

Zur Halterung der Kontaktstäbe und zur drehbeweglichen Aufnahme der Schaltwelle sind kreisförmige Fixierelemente bekannt, die flächig oder plattenartig ausgebildet sind. Die Halterung der Kontaktstäbe bzw. die drehbewegliche Aufnahme der Schaltwelle erfolgt in senkrechten, das Fixierelement durchdringenden Bohrungen. Des Weiteren sind zusätzliche Bohrungen vorgesehen, die im montierten Zustand der Schaltanordnung freiliegen und die eine Strömung des im Umsteller enthaltenen Isolieröls in Richtung der Mittenlängsachse durch das Fixierelement hindurch erlauben.

Nachteilig an den bekannten Fixierelementen ist, dass zum Erreichen einer hohen Strömungsdurchlässigkeit eine Vielzahl von Bohrungen notwendig sind, die zeitaufwendig in das Fixierelement einzubringen sind. Zudem nimmt die mechanische Stabilität des Fixierelements mit zunehmender Anzahl von Bohrungen ab und führt damit zur Instabilität der gesamten Schaltanordnung.

Ausgehend hiervon ist es Aufgabe der Erfindung, eine Schaltanordnung mit Fixierelementen anzugeben, die eine hohe elektrische Isolation und eine hohe Strömungsdurchlässigkeit bei hoher mechanischer Festigkeit aufweisen und dabei kostengünstig herstellbar sind. Die Aufgabe wird ausgehend vom Oberbegriff des Patentanspruchs 1 durch dessen kennzeichnende Merkmale gelöst.

Der wesentliche Aspekt der Erfindung besteht darin, dass das Fixierelement ein einstückiges Formteil ist, das einen äußeren Ringabschnitt mit Öffnungen zur Durchführung der Kontaktstäbe und einen zentralen, ersten Hülsenabschnitt zur drehbeweglichen Aufnahme der Schaltwelle umfasst, wobei der zentrale, erste Hülsenabschnitt über Strebenabschnitte mit dem Ringabschnitt verbunden ist. Die Ausbildung des Fixierelements als Formteil erlaubt eine kostengünstige rationelle Fertigung des Fixierelements. Durch die Anbindung der ersten, zentralen Hülse über Strebenabschnitte an den äußeren Ringabschnitt wird eine hohe Durchlässigkeit im Innenbereich des äußeren Ringabschnitts und damit eine sehr gute Durchströmbarkeit in Richtung der Mittellängsachse erreicht.

In einem bevorzugten Ausführungsbeispiel erstrecken sich die Strebenabschnitte speichenförmig vom zentralen, ersten Hülseabschnitt zum äußeren Ringabschnitt. Vorzugsweise bilden jeweils zwei parallel zueinander verlaufende Strebenabschnitte ein Paar von Strebenabschnitten, wobei diese Strebenabschnittspaare in einen Zwischenraum zwischen zwei die Kontaktstäbe aufnehmende Öffnungen weisen, d.h. die Strebenabschnittspaare sind jeweils auf Lücke zu den die Kontaktstäbe aufnehmenden Öffnungen gesetzt. Dadurch ist es möglich, dass sich die Strebenabschnitte zur Erhöhung der Stabilität der Fixierelemente geradlinig oder im Wesentlichen geradlinig im äußeren Ringabschnitt in Stegen fortsetzen, die zwischen den die Kontaktstäbe aufnehmenden Öffnungen im äußeren Ringabschnitt verlaufen.

Vorzugsweise sind jeweils zwischen den Strebenabschnitten eines Strebenabschnittspaars erste Durchflussöffnungen und zwischen den einzelnen Strebenabschnittspaaren zweite Durchflussöffnungen vorgesehen. Diese Durchflussöffnungen gewährleisten eine höhe Durchströmbarkeit des Fixierelements in Richtung der Mittellängsachse der Schaltanordnung unter Beibehaltung einer hohen mechanischen Stabilität durch die Strebenabschnitte.

Des Weiteren sind vorzugsweise zwischen den die Kontaktstäbe aufnehmenden Öffnungen dritte Durchflussöffnungen vorgesehen, und zwar im Zwischenraum zwischen zwei Stegen, die zwischen den Öffnungen zur Durchführung der Kontaktstäbe hindurch verlaufen. Diese dritten Durchflussöffnungen sorgen wiederum für eine hohe Strömungsdurchlässigkeit des Fixierelements in Richtung der Mittellängsachse der Schaltanordnung.

Vorteilhaft ist zwischen den die Kontaktstäbe aufnehmenden Öffnungen jeweils eine weitere Öffnung vorgesehen, die zur Aufnahme einer Schraubverbindung ausgebildet ist. Diese Öffnung wird vorzugsweise durch eine Abtrennung aus der dritten Durchflussöffnung gebildet. In diese Öffnung kann beispielsweise eine Schraubenmutter eingesteckt bzw. eingelegt werden, die als Gegenstück zu einem Gewindebolzen oder einer Schraube zur Befestigung des Fixierelements und damit auch der gesamten Schaltanordnung gegenüber einem Gehäuse bzw. einem Gestell des Umstellers dient.

Zur Aussteifung des Fixierelements weist der Ringabschnitt innen- und/oder außenumfangsseitig jeweils einen ringförmigen Steg auf. In den innenumfangseitig verlaufenden Steg münden die Strebenabschnitte und gehen nach außen hin in die im Wesentlichen radial zur Mittellängsachse verlaufenden Stegpaare über, die die innenumfangsseitig bzw. außenumfangsseitig verlaufenden, ringförmigen Stege miteinander verbinden. Dadurch bildet sich eine spinnennetzartige Struktur aus Strebenabschnitten und Stegen, in die die mittige, erste Hülse und zweite, außen liegende Hülsen, die zur Aufnahme der Kontaktstäbe ausgebildet sind, eingebunden sind. Diese Struktur ermöglicht eine hohe Stabilität der Fixierelemente und damit eine hohe Stabilität der gesamten Schaltanordnung.

Besonders bevorzugt ist das Fixierelement in Richtung der Mittellängsachse profiliert ausgebildet. Die Strebenabschnitte und Stege weisen insbesondere die gleiche, in Richtung der Mittellängsachse zu messende Tiefe auf, die größer ist als die Breite dieser Strebenabschnitte oder Stege in einer senkrecht zur Mittellängsachse verlaufenden Ebene. Die ersten und zweiten Hülsen ragen über diese Stege bzw. Strebenabschnitte vor.

In einem bevorzugten Ausführungsbeispiel ist das Fixierelement aus einem elektrisch hoch isolierenden Gießharz gebildet. Die Herstellung des Fixierelements erfolgt beispielsweise durch Einziehen des Gießharzes in eine Gießform unter Vakuum, so dass die Entstehung von Fehlstellen, beispielsweise Luftblasen, im Inneren des Fixierelements unterbunden wird. Auch kann zur Verarbeitung von Gießharz ein Druckgelierverfahren zur Anwendung kommen, welches eine Kostenminimierung bei ähnlich guten Ergebnissen ermöglicht.

Die Erfindung soll nachfolgend anhand von Ausführungsbeispielen im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Es wird aber ausdrücklich darauf hingewiesen, dass die Erfindung keinesfalls auf die angegebenen Beispiele beschränkt sein soll. Es zeigen:
- Fig. 1: eine gattungsgemäße Schaltanordnung in einer schematischen Seitendarstellung;
- Fig. 2: beispielhaft ein erfindungsgemäßes Fixierelement in einer Draufsicht und
- Fig. 3: beispielhaft das Fixierelement aus Fig. 2 in einer Schnittdarstellung.

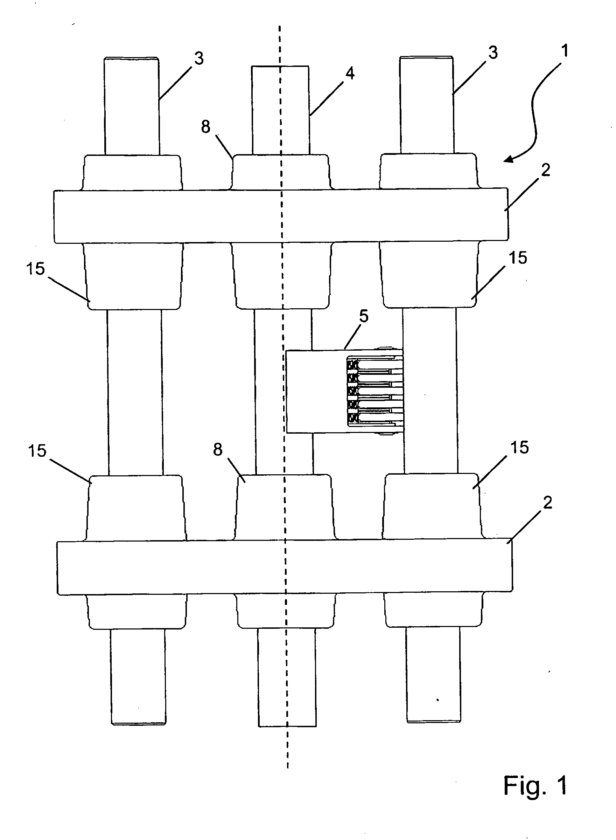

In Figur 1 ist mit dem Bezugszeichen 1 eine gattungsgemäße Schaltungsanordnung für einen Umsteller versehen. Die Schaltungsanordnung 1 besteht im Wesentlichen aus mehreren parallel zueinander verlaufenden, beabstandeten und kreisförmig um eine Mittellängsachse MLA angeordneten Kontaktstäben 3, die durch zumindest zwei voneinander beabstandete Fixierelemente 2 getragen bzw. gehalten sind.

Im Zentrum der kreisförmig angeordneten Kontaktstäbe 3 verläuft entlang der Mittellängsachse MLA eine Schaltwelle 4 mit einer Kontaktanordnung 5, die drehbar um die Mittellängsachse MLA durch die Fixierelemente 2 gelagert ist. Die Kontaktanordnung 5 kann durch Drehen der Schaltwelle 4 in mehrere Schaltpositionen gebracht werden, wobei in einer Schaltposition jeweils zwei Kontaktstäbe 3 elektrisch über die Kontaktanordnung 5 miteinander verbunden werden.

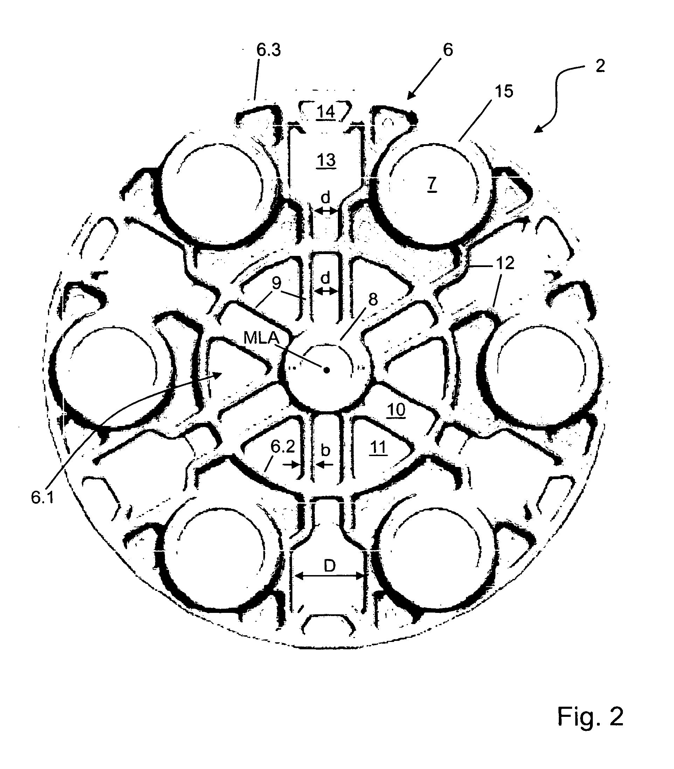

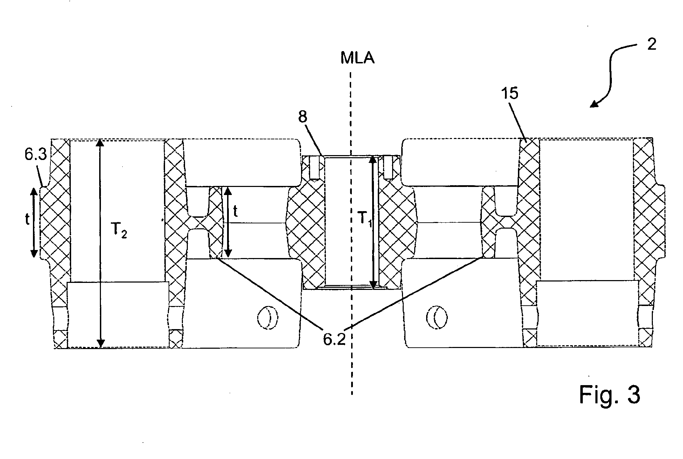

Die Figuren 2 und 3 zeigen jeweils ein Fixierelement 2 in unterschiedlichen Ansichten. Erfindungsgemäß ist das Fixierelement 2 ein im Querschnitt näherungsweise kreisförmiges, einstückiges Formteil, das einen äußeren Ringabschnitt 6 mit Öffnungen 7 zur Aufnahme der Kontaktstäbe 3 und einen zentrale, ersten Hülsenabschnitt 8 im kreisförmigen Innenbereich 6.1 zur drehbeweglichen Aufnahme der Schaltwelle 4 umfasst. Der äußere Ringabschnitt 6 und der zentrale, ersten Hülsenabschnitt 8 sind über mehrere Strebenabschnitte 9 miteinander verbunden.

Vorzugsweise erstrecken sich die Strebenabschnitte 9 speichenförmig vom ersten Hülsenabschnitt 8 in Richtung des äußeren Ringabschnittes 6. Im gezeigten Ausführungsbeispiel sind die Strebenabschnitte 9 paarweise angeordnet, wobei die Strebenabschnitte 9 eines Paars parallel zueinander verlaufen. Durch die Strebenabschnitte 9 eines Strebenabschnittspaares, den zentralen, ersten Hülsenabschnitt 8 und den äußeren Ringabschnittes 6 wird jeweils eine erste Durchflussöffnung 10 eingeschlossen. Diese ersten Durchflussöffnungen 10 weisen beispielsweise eine im Querschnitt im Wesentlichen rechteckförmige Grundform auf.

Zwischen zwei Strebenabschnittspaaren sind ferner zweite Durchflussöffnungen 11 vorgesehen, die beispielsweise bedingt durch die spitzwinklige Anordnung zweier benachbarter Strebenabschnittspaare eine dreieckförmige oder im Wesentlichen dreieckförmige Grundform aufweisen können. Alternativ können auch weiter Querschnittsformen vorgesehen sein.

Im vom äußeren Ringabschnitt 6 eingeschlossenen Innenbereich 6.1 des Fixierelementes 2 bildet sich dadurch eine speichenförmige Struktur aus, wobei der zentrale erste Hülsenabschnitt 8 die Speichennarbe und die Strebenabschnitte 9 die Speichen bilden. Durch die Anbindung des ersten Hülsenabschnittes 8 an den äußeren Ringabschnitt 6 mittels der Strebenabschnitte 9 wird erreicht, dass der Isolierölfluss in Richtung der Mittellängsachse MLA möglichst ungehindert durch den Innenbereich 6.1 erfolgen kann. Diese Strömung des Isolieröls resultiert beispielsweise aus einer Konvektionsströmung, da insbesondere im Bereich der Kontaktflächen zwischen der Kontaktanordnung 5 und den elektrisch kontaktierten Kontaktstäben 3 aufgrund von Übergangswiderständen Wärme entsteht und der dadurch entstehende Temperaturgradient zur Konfektionsströmung des Isolieröls führt.

Bevorzugt sind die Strebenabschnitte 9 stegartig ausgebildet, d.h. die Strebenabschnitte 9 weisen eine senkrecht zur Mittellängsachse MLA verlaufende Breite b auf, die kleiner ist als die parallel zur Mittellängsachse MLA verlaufende Tiefe t der Strebenabschnitte 9. Dadurch wird erreicht, dass die senkrecht zur Strömung des Isolieröls verlaufende Fläche der Strebenabschnitte 9 möglichst gering ist und damit die Strömung möglichst ungehindert erfolgen kann. Die Strebenabschnitte 9 weisen aber aufgrund der großen Tiefe t trotzdem eine hohe Stabilität auf, so dass die mittige, erste Hülse 8 stabil an den Ringabschnitt 6 angebunden ist.

Am Rand des Innenbereichs 6.1 ist vorzugsweise ein Steg 6.2 vorgesehen, dessen Tiefe t in Richtung der Mittenlängsachse MLA gleich der Tiefe t der Strebenabschnitte 9 ist. In diesen Steg 6.2 münden innenseitig die Strebenabschnitte 9 und setzen sich nach außen über den Steg 6.2 hinweg in Stegen 12 fort. Diese Stege 12 sind ebenfalls paarweise angeordnet. Die Stege 12 eines Stegpaares verlaufen in einem ersten Abschnitt parallel mit dem gleichen Abstand d wie die Streben 9 des zu dem Stegpaar gehörenden Strebenpaars. Nach einem aufweitenden Abschnitt verlaufen die Stege 12 eines Stegpaars wiederum parallel zueinander, weisen jedoch einen größeren Abstand D zueinander auf. Die Stege 12 münden in einen ringförmig verlaufenden Steg 6.3, der außenumfangseitig das Fixierelement 2 umgibt. Dieser Steg 6.3 hat näherungsweise die gleiche Tiefe t wie die Strebenabschnitte 9, der Steg 6.2 und die Stege 12.

Zwischen den Stegen 12 eines Stegpaares ist jeweils eine dritte Durchflussöffnung 13 ausgebildet, um wiederum die den Ölfluss behindernde senkrecht zur Mittellängsachse MLA verlaufende Fläche möglichst gering zu halten. Zwischen den Durchflussöffnungen 13 und dem ringförmigen Steg 6.3 ist jeweils eine weitere Öffnung 14 abgetrennt, die derart geformt ist, dass innerhalb der Öffnung 14 eine Schraubverbindung, insbesondere eine Schraubenmutter drehfest positionierbar ist. In das Innengewinde dieser in der Öffnung 14 zu positionierenden Schraubenmutter kann bezogen auf die Mittellängsachse MLA in radialer Richtung durch den Steg 6.3 ein Gewindebolzen eingeschraubt werden, sodass das Fixierelement 2 samt den von ihm getragenen Kontaktstäben 3 bzw. der Schaltwelle 4 mit einem Gestell oder einem Gehäuse des Umstellers verbunden werden kann.

Zwischen dem innenumfangseitig am Rand des Innenbereichs 6.1 verlaufenden Steg 6.2, dem außenumfangseitig verlaufenden Steg 6.3 und zwei zueinander benachbarten Stegpaaren aus Stegen 12 wird ein kreisringsegmentartiger Bereich begrenzt, in dem die Öffnungen 7 vorgesehen sind, durch die die Kontaktstäbe 3 das Fixierelement 2 senkrecht durchdringen. Um die Kriechströme zwischen den benachbarten Kontaktstäben 3 zu minimieren, werden die Öffnungen 7 durch einen zweiten Hülsenabschnitt 15 gebildet, der entlang der Mittenlängsachse MLA eine Tiefe T₂ aufweist. Diese Tiefe T₂ ist größer als die Tiefe t der Stege 6.2 und größer als die Tiefe T₁ des ersten Hülsenabschnittes 8.

Die zweiten Hülsenabschnitte 15 sind direkt in den außenumfangseitig verlaufenden Steg 6.3 sowie die zweiten Stege 12 eingebunden, sodass eine hohe mechanische Festigkeit der ausschließlich durch die Fixierelemente 3 gehaltenen Kontaktstäbe 3, insbesondere auch beim Umschalten der Schaltanordnung 1 durch Drehen der Schaltwelle 4, erreicht wird. Die hohe mechanische Stabilität des erfindungsgemäßen Fixierelements 2 wird insbesondere durch die beschriebene profilierte Ausbildung in Richtung der Mittellängsachse MLA erreicht.

Das Fixierelement 2 ist vorzugsweise aus einem Gießharz gefertigt. Es wird mittels einer mehrteiligen Gussform hergestellt, und zwar durch Einziehen eines zumindest im ausgehärteten Zustand elektrisch isolierenden Gießharzes in die Gussform unter Vakuum. Dadurch wird erreicht, dass keine Lufteinschlüsse innerhalb des Fixierelements 2 enthalten sind, sodass die hohe elektrische Isolationswirkung der Fixierelemente nicht durch Lufteinschlüsse verringert wird.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird. So kann beispielsweise das Fixierelement 2 als Formteil auch mittels weiterer geeigneter Fertigungstechnologien, beispielsweise Spritzgießen hergestellt werden.

### Bezugszeichenliste

- 1: Schaltanordnung
- 2: Fixierelement
- 3: Kontaktstab
- 4: Schaltwelle
- 5: Kontaktanordnung
- 6: äußerer Ringabschnitt
- 6.1: Innenbereich
- 6.2: Steg
- 6.3: Steg
- 7: Öffnung
- 8: zentraler, erster Hülsenabschnitt
- 9: Strebenabschnitt
- 10: erste Durchflussöffnung
- 11: zweite Durchflussöffnung
- 12: Steg
- 13: dritte Durchflussöffnung
- 14: Öffnung
- 15: zweiter Hülsenabschnitt

- MLA: Mittellängsachse
- b: Breite
- d: Abstand
- D: Abstand
- t: Tiefe
- T₁: Tiefe
- T₂: Tiefe

## Patentansprüche

1. Schaltanordnung für einen Umsteller bestehend aus mehreren zueinander parallelen, beabstandeten und kreisförmig um eine Mittellängsachse (MLA) angeordneten, durch zumindest zwei voneinander beabstandete Fixierelemente (2) getragenen Kontaktstäben (3), einer entlang der Mittellängsachse (MLA) verlaufenden, in den Fixierelementen (2) drehbar um die Mittellängsachse (MLA) gelagerten Schaltwelle (4) mit einer Kontaktanordnung (5), **dadurch gekennzeichnet, dass** das Fixierelement (2) ein einstückiges Formteil ist, das einen äußeren Ringabschnitt (6) mit Öffnungen (7) zur Durchführung der Kontaktstäbe (3) und einen zentralen, ersten Hülsenabschnitt (8) zur drehbeweglichen Lagerung der Schaltwelle (4) umfasst, wobei der zentrale, erste Hülsenabschnitt (8) über mehrere Strebenabschnitte (9) mit dem äußeren Ringabschnitt (6) verbunden ist, und dass die Strebenabschnitte (9) paarweise vorgesehen sind, wobei ein Paar von Strebenabschnitten (9) jeweils in einen Zwischenraum zwischen zwei die Kontaktstäbe (3) aufnehmenden Öffnungen (7) im äußeren Ringabschnitt (6) vorgesehen sind.

2. Schaltanordnung nach Anspruch 1, **dadurch gekennzeichnet, dass** die Strebenabschnitte (9) sich speichenförmig vom ersten Hülsenabschnitt (8) zum äußeren Ringabschnitt (6) erstrecken.

3. Schaltanordnung nach Anspruch 1, **dadurch gekennzeichnet, dass** durch die Strebenabschnitten (9) eines Paars von Strebenabschnitten (9) zumindest eine erste Durchflussöffnung (10) eingeschlossen wird und zwischen zwei benachbarten Paaren von Strebenabschnitt (9) zumindest eine zweite Durchflussöffnung (11) vorgesehen ist.

4. Schaltanordnung nach einem der vorhergehenden Ansprüche, **dadurch gekennzeichnet, dass** sich die Strebenabschnitte (9) im äußeren Ringabschnitt (6) in Stegen (12) fortsetzen, die zwischen zwei benachbarten, die Kontaktstäbe (3) aufnehmenden Öffnungen (7) verlaufen.

5. Schaltanordnung nach einem der vorhergehenden Ansprüche, **dadurch gekennzeichnet, dass** zwischen den die Kontaktstäbe (3) aufnehmenden Öffnungen (7) dritte Durchflussöffnungen (13) vorgesehen sind.

6. Schaltanordnung nach einem der vorhergehenden Ansprüche, **dadurch gekennzeichnet, dass** zwischen den die Kontaktstäbe (3) aufnehmenden Öffnungen (7) jeweils eine weitere Öffnung (14) vorgesehen ist, die zur Aufnahme einer Schraubverbindung ausgebildet ist.

7. Schaltanordnung nach einem der vorhergehenden Ansprüche, **dadurch gekennzeichnet, dass** der äußere Ringabschnitt (6) innen- und/oder außenumfangsseitig einen ringförmigen Steg (6.2, 6.3) aufweist.

8. Schaltanordnung nach einem der vorhergehenden Ansprüche, **dadurch gekennzeichnet, dass** die Öffnungen (7) zur Durchführung der Kontaktstäbe (3) jeweils durch zweite Hülsenabschnitte (15) gebildet sind.

9. Schaltanordnung nach einem der vorhergehenden Ansprüche, **dadurch gekennzeichnet, dass** das Fixierelement (2) in Richtung der Mittellängsachse (MLA) profiliert ausgebildet ist und/oder aus Gießharz hergestellt ist.

## Claims

1. Switching arrangement for a tap changer consisting of a plurality of mutually parallel spaced-apart contact rods (3), which are arranged circularly around a centre longitudinal axis (MLA) and which are carried by at least two mutually spaced-apart fixing elements (2), and a switching shaft (4), which extends along the centre longitudinal axis (MLA) and which is mounted in the fixing elements (2) to be rotatable about the centre longitudinal axis (MLA), with a contact arrangement (5), **characterised in that** the fixing element (2) is an integral moulded part which comprises an outer annular section (6) with openings (7) for passage of the contact rods (3) and a central, first sleeve section (8) for rotationally movable mounting of the switching shaft (4), wherein the central, first sleeve section (8) is connected with the outer annular section (6) by way of a plurality of strut sections (9) and that the strut sections (9) are provided in pairs, wherein the pairs of strut sections (9) are respectively provided in an intermediate space between two openings (7), which receive the contact rods (3), in the outer annular section (6).

2. Switching arrangement according to claim 1, **characterised in that** the strut sections (9) extend in spoke shape from the first sleeve section (8) to the outer annular section (6).

3. Switching arrangement according to claim 1, **characterised in that** at least one first throughflow opening (10) is enclosed by the strut sections (9) of a pair of strut sections (9) and at least one second throughflow opening (11) is provided between two adjacent pairs of strut sections (9).

4. Switching arrangement according to any one of the preceding claims, **characterised in that** the strut sections (9) continue in the outer annular section (6) as webs (12) which extend between two adjacent openings (7) receiving the contact rods (3).

5. Switching arrangement according to any one of the preceding claims, **characterised in that** third throughflow openings (13) are provided between the openings (7) receiving the contact rods (3).

6. Switching arrangement according to any one of the preceding claims, **characterised in that** a respective further opening (14) constructed to receive a screw connection is provided between the openings (7) receiving the contact rods (3).

7. Switching arrangement according to any one of the preceding claims, **characterised in that** the outer annular section (6) has an annular web (6.2, 6.3) at the inner and/or outer circumference.

8. Switching arrangement according to any one of the preceding claims, **characterised in that** the openings (7) for the passage of the contact rods (3) are respectively formed by second sleeve sections (15).

9. Switching arrangement according to any one of the preceding claims, **characterised in that** the fixing element (2) is formed to be profiled in the direction of the centre longitudinal axis (MLA) and/or is produced from casting resin.

## Revendications

1. Dispositif de commutation pour un ajusteur de tension constitué d'une série de barres de contact (3) parallèles les unes aux autres, situées à distance les unes des autres sur un cercle autour d'un axe longitudinal médian (MLA), et portées par au moins deux éléments de fixation (2) situés à distance l'un de l'autre, et d'un arbre de commutation (4) équipé d'un dispositif de contact (5) s'étendant le long de l'axe longitudinal médian (MLA) et logé mobile en rotation autour de l'axe longitudinal médian (MLA) dans les éléments de fixation (2),
**caractérisé en ce que**
l'élément de fixation (2) est un corps moulé en une seule pièce comprenant un segment annulaire externe (6) équipé d'ouvertures (7) de passage des barres de contact (3) ainsi qu'un premier segment de douille (8) central (8) pour permettre le montage mobile en rotation de l'arbre de commutation (4), le premier segment de douille central (8) étant relié au segment annulaire externe (6) par l'intermédiaire de plusieurs segments d'entretoise (9), et les segments d'entretoise (9) étant prévus par paires, une paire d'entretoises (9) étant respectivement prévue dans un espace intermédiaire situé entre deux ouvertures (7) recevant les barres de contact (3) dans le segment annulaire externe (6).

2. Dispositif de commutation conforme à la revendication 1,
**caractérisé en ce que**
les segments d'entretoise (9) s'étendent en forme de rayons du premier segment de douille (8) vers le segment annulaire externe (6).

3. Dispositif de commutation conforme à la revendication 1,
**caractérisé en ce qu'**
au moins une première ouverture de passage (10), est entourée par les segments d'entretoises (9) d'une paire de segments d'entretoises (9) et, entre deux paires de segments d'entretoises (9) voisines il est prévu au moins une seconde ouverture de passage (11).

4. Dispositif de commutation conforme à l'une des revendications précédentes,
**caractérisé en ce que**
les segments d'entretoises (9) se prolongent dans le segment annulaire externe (6) par des traverses (12) qui s'étendent entre deux ouvertures voisines (7) recevant les barres de contact (3).

5. Dispositif de commutation conforme à l'une des revendications précédentes,
**caractérisé en ce qu'**
entre les ouvertures (7) recevant les barres de contact (3) sont prévues des troisièmes ouvertures de passage (13).

6. Dispositif de commutation conforme à l'une des revendications précédentes,
**caractérisé en ce qu'**
entre les ouvertures (7) recevant les barres de contact (3) est respectivement prévue une autre ouverture (14) qui est réalisée pour recevoir une liaison par vis.

7. Dispositif de commutation conforme à l'une des revendications précédentes,
**caractérisé en ce que**
le segment annulaire externe (6) comporte une traverse annulaire (6.2, 6.3) du côté de sa périphérie interne et/ou de sa périphérie externe.

8. Dispositif de commutation conforme à l'une des revendications précédentes,
**caractérisé en ce que**
les ouvertures (7) sont respectivement formées pour permettre de faire respectivement passer les barres de contact (3) au travers de seconds segments de douilles (15).

9. Dispositif de commutation conforme à l'une des revendications précédentes,
**caractérisé en ce que**
l'élément de fixation (2) est profilé dans la direction de l'axe longitudinal médian (MLA) et/ou est réalisé en résine moulée.
